# EUROPÄISCHE PATENTSCHRIFT

(11) **EP 0 981 009 B1**
(45) Veröffentlichungstag und Bekanntmachung des Hinweises auf die Patenterteilung: **29.11.2006**
(21) Anmeldenummer: 99116369.2
(22) Anmeldetag: 19.08.1999
(51) Int. Cl.: F17C 3/04, F17C 1/00, F17C 1/08

(54) **Speicherbehälter für kryogene Flüssigkeiten**
Storage tank for cryogenic liquid
Réservoir pour le stockage d'un liquide cryogénique

(30) Priorität: 20.08.1998 DE 19837886
(43) Veröffentlichungstag der Anmeldung: 23.02.2000
(73) Patentinhaber: Linde Aktiengesellschaft, 65189 Wiesbaden (DE)
(72) Erfinder: Rüdiger, Horst, Dipl.-Ing., 86163 Augsburg (DE); Sillat, Diethard, Dipl.-Ing., 82152 Martinsried (DE)
(74) Vertreter: Kasseckert, Rainer

(56) Entgegenhaltungen:
- EP-A- 0 895 017
- DE-C- 739 093
- FR-A- 2 764 671
- GB-A- 2 089 014
- US-A- 2 600 015
- US-A- 3 157 147
- US-A- 3 570 702

## Beschreibung

Die Erfindung betrifft einen Speicherbehälter, insbesondere für kryogene Flüssigkeiten, mit einem inneren und einem äußeren Behälter, wobei sich zwischen dem inneren und dem äußeren Behälter ein Isolationsraum befindet und wobei zumindest eine Stütze zur Erhöhung der Stabilität des inneren und/oder äußeren Behälters vorgesehen ist.

Technische Gase, wie Helium, Wasserstoff, Stickstoff, Sauerstoff oder LNG (Liquid Natural Gas), werden in Speicherbehältern häufig im flüssigen Aggregatszustand gelagert oder transportiert. Derartige Speicherbehälter sind in der Regel doppelwandig ausgeführt, wobei in dem inneren Behälter das flüssige Gas aufbewahrt wird und der Zwischenraum zwischen dem inneren und dem äußeren Behälter evakuiert wird und zur Isolierung dient.

Aufgrund der Vakuumisolierung wirken sowohl auf den inneren Behälter, insbesondere bei einer Speicherung des Flüssiggases unter erhöhtem Druck, als auch auf den äußeren Behälter hohe Kräfte, die bei einer Speicherbehälterkonstruktion mit ebenen Seitenflächen hohe Wandstärken erforderlich machen. Aus diesem Grund wurden die Speicherbehälter bisher meist in zylindrischer oder kugelförmiger Bauweise ausgeführt.

Wasserstoff und LNG werden in zunehmendem Maße als Kraftstoff für Fahrzeuge, Schiffe oder Flugzeuge eingesetzt. Die Speicherung erfolgt hierbei vorzugsweise in flüssiger Form in den oben beschriebenen Druckspeicherbehältern mit Vakuumisolierung. Die bisher übliche zylindrische Bauart der Behälter paßt sich jedoch nur schlecht an die Fahrzeuggeometrie an. So wird beispielsweise bei den sogenannten Niederflurbussen eine Tankanordnung im oberen Busbereich oder auf dem Fahrzeugdach angestrebt, wobei der Tank großflächig, aber möglichst niedrig ausfallen soll.

In der DE-OS 195 24 681, welche als nächstliegender Stand der Technik angesehen wird, wird daher ein Speicherbehälter für kryogene Medien vorgeschlagen, welcher aus mehreren flüssigkeitsseitig miteinander kommunizierenden, rohrförmigen Einzelbehältem besteht, die von einem gemeinsamen äußeren Isolationsbehälter, der in der Regel keine zylindrische Symmetrie aufweist, umgeben sind. Auf diese Weise ist es möglich, durch geeignete Wahl der Einzelbehälter die Tankform an die Fahrzeuggeometrie anzupassen.

Insbesondere bei großflächiger, flacher Bauweise dieser Speicherbehälter müssen allerdings Vorkehrungen getroffen werden, um die auf die auf die Wände des äußeren Behälters einwirkenden hohen Druckkräfte aufzunehmen. Gemäß der DE-OS 195 24 681 sind daher Stützen zur Abstützung des äußeren gegen den inneren Behälter vorgesehen. Für diese Stützen wird zwar ein schlecht wärmeleitendes Material verwendet, dennoch bleibt ein nicht unerheblicher Wärmeeintrag über diese Stützen in die gespeicherte kryogene Flüssigkeit bestehen.

Aufgabe vorliegender Erfindung ist es daher, einen Speicherbehälter der eingangs genannten Art vorzuschlagen, dessen Geometrie sich in einem hohen Maße an die jeweiligen Platzverhältnisse und Anforderungen anpassen läßt, wobei der Wärmeeintrag in den inneren Behälter minimiert werden soll.

Diese Aufgabe wird erfindungsgemäß dadurch gelöst, dass zumindest eine Stütze zur Erhöhung der Stabilität des äußeren Behälters und/oder zumindest eine Stütze zur Erhöhung der Stabilität des inneren Behälters vorgesehen ist, und die einzeine(n) Stütze(n) keine Verbindung(en) zwischen dem inneren Behälter und dem äußeren Behälter herstellt bzw. herstellern.

Erfindungsgemäß kann die Form des äußeren Behälters beliebig gewählt und so an den für den Speicherbehälter vorgesehenen Platz optimal angepaßt werden. Zur Aufnahme der zu speichernden Flüssigkeit sind ein oder mehrere innere Behälter vorgesehen, deren Geometrie von der des äußeren Behälters im wesentlichen unabhängig ist. Die auf den äußeren und/oder den oder die inneren Behälter einwirkenden Kräfte werden durch eine oder mehrere Stützen aufgenommen, die erfindungsgemäß so angeordnet sind, daß sie keinen Beitrag zur Wärmeleitung zwischen dem inneren und dem äußeren Behälter liefern.

Selbstverständlich sind auch bei der erfindungsgemäßen Konstruktion Träger notwendig, die den inneren Behälter in dem äußeren Behälter positioniert halten und daher eine Wärmeleitungsbrücke zwischen den beiden Behältern darstellen. Diese Träger müssen jedoch keine Kräfte aufnehmen, die aus den unterschiedlichen Drucken in dem inneren Behälter, in dem Zwischenraum zwischen den beiden Behältern und in dem den äußeren Behälter umgebenden Raum herrühren, und werden daher vorzugsweise dementsprechend dünn ausgeführt sein, so daß der Wärmeeintrag über diese Träger vernachlässigbar klein ist.

Die Stützen stehen entweder nur mit dem äußeren oder nur mit dem oder den inneren Behältern in Kontakt. Die Stützen verbinden dagegen nicht einen inneren mit dem äußeren Behälter. Ein Wärmeeintrag in den inneren Behälter über Wärmeleitung durch die Stützen ist somit ausgeschlossen.

Ist nur ein innerer Behälter vorgesehen, so verbinden die Stützen bevorzugt gegenüberliegende Wände des inneren Behälters, um so die durch das den Innenbehälter umgebende Vakuum hervorgerufenen Zugkräfte zu kompensieren. In analoger Weise verlaufen auch die den äußeren Behälter stabilisierenden Stützen bevorzugt zwischen gegenüberliegenden Wänden dieses Behälters. Bei mehreren inneren Behältern können die Stützen entweder innerhalb eines Behälters angebracht sein oder diesen in Form eines stabilisierenden Gerüsts umgeben oder auch von Vorteil einen der inneren Behälter gegen einen anderen inneren Behälter abstützen. Je nach Anordnung sind die Stützen dann entweder für die Aufnahme von Zug- oder Druckkräften ausgelegt.

Um eine große Menge der kryogenen Flüssigkeit speichern zu können, ist es von Vorteil, die Form des inneren Behälters der des äußeren Behälters anzupassen, um so den zur Verfügung stehenden Platz optimal auszunutzen. Hierbei ist jedoch darauf zu achten ist daß zwischen den beiden Behältern ein Isolationsraum verbleibt. In der Regel müssen hierbei Stützen für den inneren und den äußeren Behälter vorgesehen werden. Der innere Behälter weist bei dieser Konstruktion Durchführungen oder Aussparungen für die Stützen des äußeren Behälters auf, so daß die Stützen des äußeren Behälters nicht mit dem inneren Behälter in wärmeleitenden Kontakt kommen.

Es hat sich aus konstruktiver Sicht als günstig erwiesen, nicht nur einen, sondern mehrere innere Behälter in einen gemeinsamen Außenbehälter einzubringen. Form und Größe der einzelnen Innenbehälter werden dabei von Vorteil so an die Form des äußeren Behälters angepaßt, daß dessen Volumen optimal ausgenutzt wird. Die Verwendung mehrerer innerer Behälter hat mehrere Vorteile: Es können Standardbehälter, wie z.B. Zylinder, verwendet werden, die Geometrie der Innenbehälter kann so gewählt werden, daß diese auch ohne zusätzliche Stützen die in dem Speicherbehälter vorhandenen Druckunterschiede aushalten und der zwischen den einzelnen Innenbehältern freibleibende Raum steht zur Durchführung der Stützen für den Außenbehälter zur Verfügung.

Bevorzugt sind bei mehreren Innenbehältern diese flüssigkeits- und/oder gasseitig miteinander verbunden. Auf diese Weise ist beispielsweise nur eine einzige Füllstandsanzeige oder nur ein Druckmeßgerät für alle Innenbehälter notwendig.

Der oder die Innenbehälter besitzen vorzugsweise einen runden oder elliptische Querschnitt, da diese besonders druckstabil sind. Für den äußeren Behälter hat sich dagegen die Quaderform bewährt.

Die erfindungsgemäße Ausführung des Speichertanks eignet sich insbesondere für Tanks, deren Innenbehälter ein Fassungsvermögen zwischen 50 und 1000 Liter, bevorzugt zwischen 800 und 900 Liter, besitzt.

Die durch die Erfindung erzielten Stabilitätsvorteile wirken sich in flachen Tanks und insbesondere in Tanks, deren Höhe weniger als die Hälfte von deren Länge und Breite beträgt, besonders günstig aus. Bei einem 1000 Liter-Tank in Flachbauweise, d.h. einem Tank, dessen Höhe beispielsweise zwischen 30 und 50 cm liegt, sind die Ober- bzw. Unterseite entsprechend mehr als 2 m² groß, so daß bei einem Druck von 10 bar im Innenbehälter enorme Kräfte auf die Ober- und Unterseite des Innenbehälters einwirken, die jedoch durch die erfindungsgemäßen Stützen aufgenommen werden.

Die Erfindung hat sich insbesondere bei der Speicherung flüssigen Wassserstoffs, flüssigen Sauerstoffs, flüssigen Stickstoffs, flüssigen Heliums sowie LNG bewährt. Der erfindungsgemäße Speicherbehälter ist aber nicht nur zur Speicherung kalter Medien, sondern ebenso zur Speicherung warmer oder heißer Medien vorteilhaft. Die Erfindung kann immer dann mit Vorteil eingesetzt werden, wenn zwischen dem zu speichernden Medium, Flüssigkeit oder Gas, und der Umgebung eine deutliche Temperaturdifferenz besteht. Die hohe Anpaßbarkeit des Speicherbehälters an unterschiedlichste Platzangebote ist besonders bei der Verwendung dieser Speicherbehälter in Fahrzeugen, insbesondere Landfahrzeugen, von Vorteil.

Besonders zweckmäßig ist der Einsatz des erfindungsgemäßen Speichertanks bei der Speicherung von Flüssigkeiten bei einem Druck von mehr als 5 bar und insbesondere bei einem Druck zwischen 8 und 15 bar.

Die Erfindung sowie weitere Einzelheiten der Erfindung werden im folgenden anhand von in den Zeichnungen dargestellten Ausführungsbeispielen näher erläutert. Hierbei zeigen:
- Figur 1: die Seitenansicht eines erfindungsgemäßen Speicherbehälters,
- Figur 2: die Draufsicht auf den in Figur 1 gezeigten Behälter und
- Figur 3: eine altemative-Ausführungsform der Erfindung.

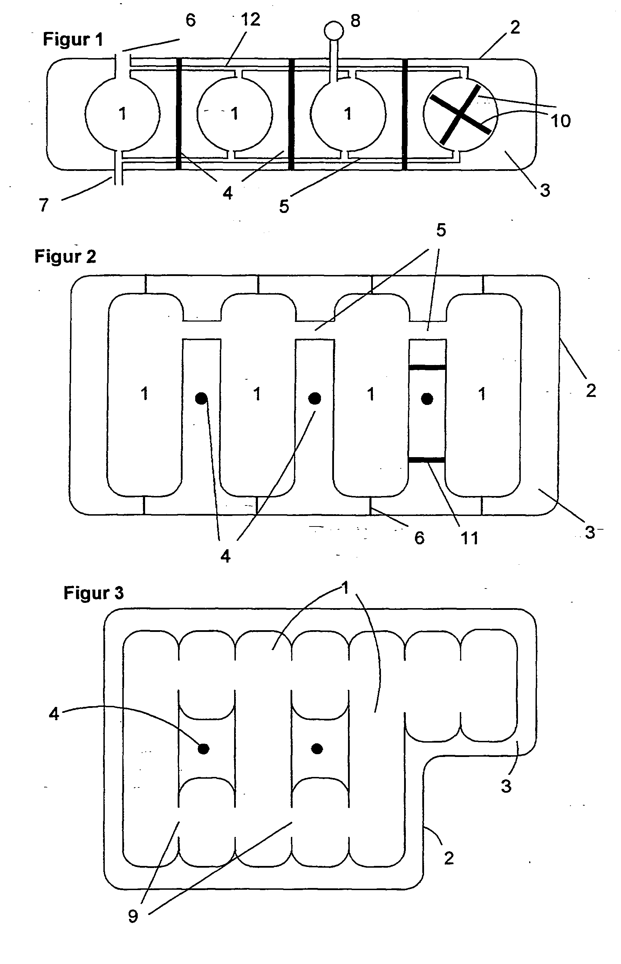

In Figur 1 ist ein Speicherbehälter dargestellt, wie er beispielsweise in Bussen zur Speicherung von flüssigem Wasserstoff als Kraftstoff eingesetzt werden kann. Die flache Form des Speicherbehälters eignet sich besonders für eine Anordnung im oberen Busbereich oder auf dem Dach des Busses bzw. allgemein auf Fahrzeugdächem.

Der Speicherbehälter besteht aus mehreren inneren Behältern 1 und einem die Innenbehälter 1 umgebenden Außenbehälter 2. Zwischen den inneren 1 und dem äußeren Behälter 2 befindet sich ein Isolationsraum 3, der in der Regel vakuumisoliert ist, aber auch mit Perlit oder anderem Isolationsmaterial gefüllt sein kann. Die Innenbehälter 1 sind untereinander flüssigkeitsseitig über Verbindungsrohre 5 und gasseitig über Verbindungsrohre 12 verbunden und mit einer Füll- 6 sowie einer Entnahmeleitung 7 versehen. Aufgrund der miteinander kommunizierenden Behälter ist lediglich ein einziger Füllstandsanzeiger 8 erforderlich.

Der Speicherbehälter besitzt ein Fassungsvermögen von 900 Liter. Die Abmessungen des äußeren Behälters betragen etwa 40 cm x 200 cm x 120 cm. Die Innenbehälter 1 besitzen eine zylindrische Geometrie und können so auch bei relativ geringen Wandstärken die aufgrund des Druckunterschiedes zwischen dem Inneren des Innenbehälters 1 und dem Isolationsraum 3 auftretenden Kräfte aufnehmen. Die Innenbehälter 1 können jedoch, falls dies notwendig erscheint, auch, wie in dem rechten Behälter 1 in Figur 1 angedeutet, durch im Inneren der Behälter 1 angebrachte Stützen 10 stabilisiert werden. In Figur 2 ist alternativ oder ergänzend zu dieser Art der Stabilisierung eine Abstützung der Innenbehälter 1 gegeneinander dargestellt. Die hierzu eingesetzten Stützen 11 verstreben die Innenbehälter 1 untereinander, berühren aber weder den Außenbehälter 2 noch die den Außenbehälter 2 tragenden Stützen 4.

Zur Abstützung des äußeren Behälters 2 sind dagegen Stützen 4 notwendig. Diese sind zwischen zwei gegenüberliegenden Wänden des Außenbehälters 2 verstrebt und haben keine wärmeleitende Verbindung zu den Innenbehältern 1.

In Figur 2 ist die Draufsicht auf den in Figur 1 gezeigten Speicherbehälter dargestellt. Die Stützen 4 verlaufen in den Zwischenräumen zwischen den Innenbehältern 1 und verbinden nur die warmen Wände des Außenbehälters 2 miteinander. Die Innenbehälter 1 werden lediglich von dünnen, schlecht wärmeleitenden Trägem 6, die keinerlei Druckkräfte aufnehmen müssen, in dem Außenbehälter 2 in ihrer Position gehalten.

In Figur 3 ist eine weitere Konfiguration der Innenbehälter 1 zu sehen. Die ebenfalls als Zylinder ausgeführten inneren Behälter 1 sind hierbei an ihren Längsseiten teilweise miteinander verbunden, z.B. verlötet oder verschweißt, wobei Größe und Form der Innenbehälter 1 so ausgewählt werden, daß eine möglichst gute Anpassung an den Außenbehälter 2 erzielt wird. Die in den Behältern 1 gespeicherte Flüssigkeit kann über Öffnungen 9, die sich an den Kontaktstellen zweier benachbarter Innenbehälter 1 befinden, von einem Behälter 1 in den nächsten strömen. Zwischen den Innenbehältern 1 sind Freiräume, durch die Stützen 4 zur Abstützung des Außenbehälters 2 verlaufen.

## Patentansprüche

1. Speicherbehälter, insbesondere für kryogene Flüssigkeiten, mit einem inneren und einem äußeren Behälter, wobei sich zwischen dem inneren und dem äußeren Behälter ein Isolationsraum befindet, **dadurch gekennzeichnet, dass** zumindest eine Stütze (4) zur Erhöhung der Stabilität des äußeren Behälters (2) und/oder zumindest eine Stütze (10, 11) zur Erhöhung der Stabilität des inneren Behälters (1) vorgesehen ist, und die einzeine(n) Stütze(n) (4, 10, 11) keine Verbindung(en) zwischen dem inneren Behälters (1) und dem äußeren Behälter (2) herstellt bzw. herstellen.

2. Speicherbehälter nach Anspruch 1, **dadurch gekennzeichnet, daß** die Stütze (10, 11) Wandungen des und/oder der inneren Behälter (1) miteinander verbindet.

3. Speicherbehälter nach einem der Ansprüche 1 oder 2, **dadurch gekennzeichnet, daß** die Stütze (4) Wandungen des äußeren Behälters (2) miteinander verbindet.

4. Speicherbehälter nach einem der Ansprüche 1 bis 3, **dadurch gekennzeichnet, daß** mindestens ein Träger (6) zur Positionierung des inneren Behälters (1) in dem äußeren Behälter (2) vorgesehen ist, der eine wesentliche geringere Stabilität als die Stütze (4, 10, 11) besitzt.

5. Speicherbehälter nach einem der Ansprüche 1 bis 4, **dadurch gekennzeichnet, daß** mehr als ein innerer Behälter (1) von dem äußeren Behälter (2) umgeben ist.

6. Speicherbehälter nach Anspruch 5, **dadurch gekennzeichnet, daß** die inneren Behälter (1) unterschiedliche Form und/oder Größe besitzen.

7. Speicherbehälter nach einem der Ansprüche 5 oder 6, **dadurch gekennzeichnet, daß** die inneren Behälter (1) flüssigkeits- und/oder gasseitig miteinander verbunden sind.

8. Speicherbehälter nach einem der Ansprüche 1 bis 7, **dadurch gekennzeichnet, daß** der innere Behälter (1) einen runden oder elliptischen Querschnitt aufweist.

9. Speicherbehälter nach einem der Ansprüche 1 bis 8, **dadurch gekennzeichnet, daß** der äußere Behälter (2) im wesentlichen quaderförmig ist.

10. Speicherbehälter nach einem der Ansprüche 1 bis 9, **dadurch gekennzeichnet, daß** der innere Behälter (1) ein Fassungsvermögen von 50 bis 1000 l, bevorzugt von 800 bis 900 l, besitzt.

11. Speicherbehälter nach einem der Ansprüche 1 bis 10, **dadurch gekennzeichnet, daß** der äußere Behälter (2) flach ausgeführt ist, insbesondere daß die Ausdehnung des äußeren Behälters (2) in einer Raumrichtung weniger als die Hälfte der Ausdehnung des äußeren Behälters (2) in den beiden dazu senkrechten Raumrichtungen beträgt.

12. Verwendung eines Speicherbehälters nach einem der Ansprüche 1 bis 11 zur Speicherung kryogener Flüssigkeiten, insbesondere flüssigen Wasserstoffs oder LNG, in einem Fahrzeug, insbesondere Landfahrzeug.

13. Verwendung eines Speicherbehälters nach einem der Ansprüche 1 bis 12 zur Speicherung von Flüssigkeiten bei einem Druck von mehr als 5 bar, insbesondere bei einem Druck zwischen 8 und 15 bar.

## Claims

1. Storage tank, in particular for cryogenic liquids, comprising an inner and an outer tank, with an insulation space being located between the inner and the outer tank, **characterized in that** there is provided at least one support (4) for increasing the stability of the outer tank (2) and/or at least one support (10, 11) for increasing the stability of the inner tank (1), and the respective support or supports (4, 10, 11) does not or do not connect the inner tank (1) to the outer tank (2).

2. Storage tank according to Claim 1, **characterized in that** the support (10, 11) connects walls of the inner tank (1) and/or of the inner tanks (1) to one another.

3. Storage tank according to one of Claims 1 or 2, **characterized in that** the support (4) connects walls of the outer tank (2) to one another.

4. Storage tank according to one of Claims 1 to 3, **characterized in that** at least one carrier (6) is provided for positioning the inner tank (1) within the outer tank (2), which has a substantially lower stability than the support (4, 10, 11).

5. Storage tank according to one of Claims 1 to 4, **characterized in that** more than one inner tank (1) is surrounded by the outer tank (2).

6. Storage tank according to Claim 5, **characterized in that** the inner tanks (1) have different shape and/or size.

7. Storage tank according to one of Claims 5 or 6, **characterized in that** the inner tanks (1) are connected to one another on the liquid side and/or on the gas side.

8. Storage tank according to one of Claims 1 to 7, **characterized in that** the inner tank (1) has a circular or elliptical cross section.

9. Storage tank according to one of Claims 1 to 8, **characterized in that** the outer tank (2) has a substantially cuboidal shape.

10. Storage tank according to one of Claims 1 to 9, **characterized in that** the inner tank (1) has a capacity of from 50 to 1000 1, preferably of from 800 to 900 1.

11. Storage tank according to one of Claims 1 to 10, **characterized in that** the outer tank (2) is flat, in particular that the extension of the outer tank (2) in one spatial direction is less than half of the extension of the outer tank (2) in the two spatial directions perpendicular thereto.

12. Use of a storage tank according to one of Claims 1 to 11 for storing cryogenic liquids, in particular liquid hydrogen or LNG, in a vehicle, in particular land vehicle.

13. Use of a storage tank according to one of Claims 1 to 12 for storing liquids at a pressure of greater than 5 bar, in particular at a pressure between 8 and 15 bar.

## Revendications

1. Réservoir de stockage, notamment de liquides cryogéniques, comprenant un réservoir interne et un réservoir externe, un espace d'isolation étant situé entre le réservoir interne et le réservoir externe, **caractérisé en ce que** l'on prévoit au moins un support (4) pour augmenter la stabilité du réservoir externe (2) et/ou au moins un support (10, 11) pour augmenter la stabilité du réservoir interne (1), et le(s) support(s) individuel(s) (4, 10, 11) ne constitue(nt) aucune connexion(s) entre le réservoir interne (1) et le réservoir externe (2).

2. Réservoir de stockage selon la revendication 1, **caractérisé en ce que** le support (10, 11) relie ensemble des parois du et/ou des réservoirs internes (1).

3. Réservoir de stockage selon la revendication 1 ou 2, **caractérisé en ce que** le support (4) relie ensemble des parois du réservoir externe (2).

4. Réservoir de stockage selon l'une quelconque des revendications 1 à 3, **caractérisé en ce qu'**au moins un dispositif de support (6) est prévu pour le positionnement du réservoir interne (1) dans le réservoir externe (2) qui possède une stabilité nettement moins bonne que le support (4, 10, 11).

5. Réservoir de stockage selon l'une quelconque des revendications 1 à 4, **caractérisé en ce que** plus d'un réservoir interne (1) est entouré par le réservoir externe (2).

6. Réservoir de stockage selon la revendication 5, **caractérisé en ce que** les réservoirs internes (1) ont différentes formes et/ou tailles.

7. Réservoir de stockage selon l'une quelconque des revendications 5 ou 6, **caractérisé en ce que** les réservoirs internes (1) sont connectés ensemble de manière étanche aux liquides et/ou aux gaz.

8. Réservoir de stockage selon l'une quelconque des revendications 1 à 7, **caractérisé en ce que** le réservoir interne (1) présente une section transversale ronde ou elliptique.

9. Réservoir de stockage selon l'une quelconque des revendications 1 à 8, **caractérisé en ce que** le réservoir externe (2) a une forme sensiblement quadrilatérale.

10. Réservoir de stockage selon l'une quelconque des revendications 1 à 9, **caractérisé en ce que** le réservoir interne (1) possède une contenance de 50 à 1000 1, de préférence de 800 à 900 1.

11. Réservoir de stockage selon l'une quelconque des revendications 1 à 10, **caractérisé en ce que** le réservoir externe (2) est plat, notamment **en ce que** l'étendue du réservoir externe (2) dans une direction spatiale est inférieure à la moitié de l'étendue du réservoir externe (2) dans les deux directions spatiales perpendiculaires à la première.

12. Utilisation d'un réservoir de stockage selon l'une quelconque des revendications 1 à 11 pour le stockage de liquides cryogéniques, notamment d'hydrogène liquide ou de LNG, dans un véhicule, notamment un véhicule terrestre.

13. Utilisation d'un réservoir de stockage selon l'une quelconque des revendications 1 à 12 pour le stockage de liquides à une pression de plus de 5 bars, notamment à une pression comprise entre 8 et 15 bars.
